(19) Europäisches Patentamt
European Patent Office
Office européen des brevets

(11) Publication number: **0 113 994**
**B1**

(12) **EUROPEAN PATENT SPECIFICATION**

(45) Date of publication of patent specification: **14.01.87**

(51) Int. Cl.$^4$: **C 07 F 9/15**

(21) Application number: **83307781.1**

(22) Date of filing: **20.12.83**

(54) **Phosphorus acid catalyst for preparation of 3,9-dichloro-2,4,8,10-tetraoxa-3,9-diphospha spiro (5,5) undecane.**

(30) Priority: **28.12.82 US 453971**

(43) Date of publication of application:
**25.07.84 Bulletin 84/30**

(45) Publication of the grant of the patent:
**14.01.87 Bulletin 87/03**

(84) Designated Contracting States:
**BE DE FR GB NL**

(56) References cited:
**US-A-3 968 188**
**US-A-4 118 435**

**BULLETIN OF THE CHEMICAL SOCIETY OF JAPAN, vol. 43, no. 2, February 1970, pages 456-461, Kogusuri Printing Co., Tokyo (JP); M. YOSHIKAWA et al.: "Studies of Phosphorylation. IV. The Phosphorylation of Nucleosides with Phosphorus Trihalide".**

(73) Proprietor: **ALBRIGHT & WILSON INC.**
**P.O. Box 26229**
**Richmond, Virginia 23260-6229 (US)**

(72) Inventor: **Johnston, Byron Everett**
**Route 13**
**Skillman New Jersey 08558 (US)**
Inventor: **Napier, Roger Paul**
**R.R. 1, Box 445**
**Califon New Jersey 07830 (US)**

(74) Representative: **Wilson, Michael John et al**
**c/o Albright & Wilson Limited**
**1 Knightsbridge Green**
**London SW1X 7QD (GB)**

**EP 0 113 994 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This application is related to a process for the preparation of a pentaerythritolester of phosphorohalidous acid with the use of a phosphorus acid as catalyst.

As shown in U.S. Patent No. 3,192,242, 3,9-dichloro-2,4,8,10-tetraoxa-3,9-diphospha spiro [5,5] undecane (SPDC) is a useful intermediate for the preparation of effective flame retardants, especially 2,2-bis(chloromethyl) 1,3-propylene bis[bis(2-chloroethyl) phosphate]. In U.S. Patent No. 3,968,188 it is stated that certain catalysts effectively convert mixtures of pentaerythritol and phosphorus trichloride to SPDC.

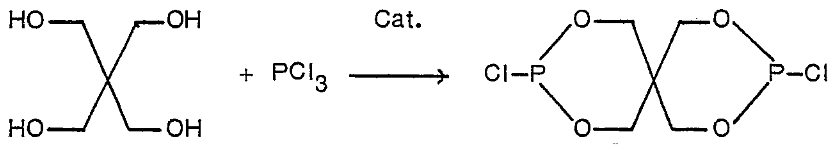


PENTAERYTHRITOL SPOC

More particularly, this reference suggests that SPDC can be obtained by reacting pentaerythritol with a trivalent phosphorus trihalide in the presence of halides of metals of Groups I and II of the Periodic Table, tertiary amines and heterocyclic nitrogen-containing compounds.

According to the invention, there is provided a process for reacting pentaerythritol with a trivalent phosphorus trihalide conducted in the presence of an effective catalytic amount of phosphorus acid catalyst comprising a compound of the formula

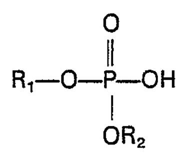 (I)

where $R_1$ is a $C_1$—$C_{20}$ hydrocarbyl group and $R_2$ is hydrogen or a $C_1$—$C_{20}$ hydrocarbyl group.

This invention further provides an improved process for the preparation of the pentaerythritol ester of phosphorohalidous acid by the reaction of pentaerythritol and phosphorus trichloride, at a pentaerythritol:phosphorus trichloride molar ratio of 1:2, the improvement comprising conducting the reaction in the presence of a catalytically effective amount of phosphorus acid catalyst comprising a compound of the formula

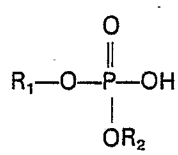 (I)

where $R_1$ is a $C_1$—$C_{20}$ hydrocarbyl group and $R_2$ is hydrogen or a $C_1$—$C_{20}$ hydrocarbyl group.

The phosphorus acid catalyst compounds of the present invention are of the formula

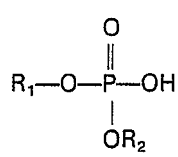 (I)

where $R_1$ is a $C_1$—$C_{20}$ hydrocarbyl group and $R_2$ is hydrogen or a $C_1$—$C_{20}$ hydrocarbyl group. The $R_1$ and $R_2$ hydrocarbyl groups may be substituted or unsubstituted. Examples of $R_1$ and $R_2$ hydrocarbyl groups include alkyl groups and aryl groups such as phenyl and $C_1$—$C_4$ alkyl substituted phenyl. Preferably, such $R_1$ and $R_2$ alkyl groups are $C_1$—$C_6$ alkyl such as butyl, propyl, ethyl and, especially, methyl. These catalysts may be easily prepared by methods well known in the art.

A preferred example of a phosphorus acid catalyst which is commercially available is methyl acid phosphate which is primarily a mixture of mono- and di-methyl esters of phosphoric acid along with a small amount of phosphoric acid.

The catalyst is used in a concentration of from 0.005 weight percent to 12 weight percent (based on pentaerythritol), preferably from 0.05 to 2 weight percent.

The preferred mole ratio of the phosphorus trichloride to pentaerythritol required to produce SPDC is

2:1. As a practical matter, slight variations from that ratio are acceptable.

An excess of phosphorus trichloride may bee charged initially to make up for losses caused by entrainment with hydrogen chloride during the reaction. Less than the needed amount of phosphorus trichloride, however, may be charged and after the elimination of hydrogen chloride is essentially complete, the additional amount of phosphorus trichloride needed to provide the 2:1 molar ratio mey be added. The mixture is then heated until the rearrangement of undesired structures to SPDC is essentially complete. Additional pentaerythritol may, similarly, be added toward the end of the reaction when needed to compensate for initial deficiencies of this reactant. Thus, undesired phosphorus-containing structures that result from a deficiency of either reactant can be readily converted to the desired SPDC structure by adding enough of the deficient reactant to bring the molar ratio of reactants consumed to 2:1 and then heating in the presence of a catalyst of this invention.

The reactants may be mixed at a temperature of from 20°C to 70°C and then gradually heated. A temperature of from 80°C to 125°C for from ½ to hours in the presence of an aforedescribed catalyst is generally required to complete the reaction. Preferably, the reaction mixture is heated to a temperature of from 90° to 115°C for ½ to 2 hours.

The catalyst may be added when the reactants are initially mixed or may be added after the temperature of the reaction mixture has reached at least 80°C. Preferably, a small portion of the catalyst is added to the reaction mixture prior to heating with the balance added after the temperature of the reaction has reached at least 80°C. The SPDC formed according to the present invention can be then converted to a desired flame retardant.

The catalyst of the present invention is easily prepared, soluble and effective and poses no downstream removal or processing problems in the preparation of flame retardants.

In the process for reacting pentaerythritol with phosphorus trichloride according to the present invention, the phosphorus trichloride reactant may optionally be replaced by phosphorus tribromide.

The phosphorus acid catalyst when used in accordance with the present invention may be completely soluble in the reaction medium. This catalyst may be a pumpable liquid, non hygroscopic, commercially available and highly effective at low (1—2% based on pentaerythritol) levels.

**Claims**

1. A process for the preparation of a pentaerythritol ester of phosphorohalidous acid by the reaction of pentaerythritol with a trivalent phosphorus trihalide conducted in the presence of a catalyst characterized in that the reaction is conducted in the presence of an effective catalytic amount of a phosphorus acid catalyst comprising a compound of the formula

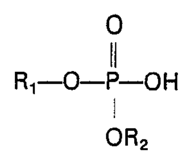

where $R_1$ is a $C_1$—$C_{20}$ hydrocarbyl group and $R_2$ is hydrogen or a $C_1$—$C_{20}$ hydrocarbyl group.

2. A process according to claim 1, characterized in that the trivalent phosphorus trihalide is phosphorus trichloride or phosphorus tribromide.

3. A process according to claim 2, characterized in that the phosphorus trihalide is phosphorus tribromide.

4. A process according to any preceding claim, characterized in that the molar ratio of pentaerythritol:phosphorus trihalide is 1:2.

5. A process according to any preceding claim characterized in that $R_1$ is an alkyl or aryl group and $R_2$ is hydrogen or an alkyl or aryl group.

6. A process according to claim 5, characterized in that $R_1$ is $C_1$—$C_6$ alkyl and $R_2$ is hydrogen or $C_1$—$C_6$ alkyl.

7. A process according to claim 6, characterized in that the catalyst is methyl acid phosphate.

8. A process according to any preceding claim, characterized in that the pentaerythritol and phosphorus trihalide are initially combined at a temperature of from 20° to 70°C and then heated to a temperature from 80°C to 125°C.

9. A process according to claim 4 or 5, characterized in that pentaerythritol and phosphorus trichloride in molar ratio of 1:2 react in the presence of said phosphorus acid catalyst.

10. A process according to claim 9, characterized in that $R_1$ is $C_1$—$C_6$ alkyl and $R_2$ is hydrogen or $C_1$—$C_6$ alkyl.

11. A process according to claim 10, characterized in that the catalyst is methyl acid phosphate.

12. A process according to claim 9, 10 or 11, characterized in that the pentaerythritol and phosphorus trichloride are initially combined at a temperature of from 20° to 70°C and then heated to a temperature from 80°C to 125°C.

**Patentansprüche**

1. Verfahren zur Herstellung eines Pentaerythrit-Esters von halogenphosphoriger Säure durch Umsetzen von Pentaerythrit mit einem 3-wertigen Phosphortrihalogenid, das in Gegenwart eines Katalysators durchgeführt wird, dadurch gekennzeichnet, daß die Reaktion in Gegenwart einer wirksamen katalytisachen Menge eines Phosphorsäure-Katalysators, bestehend aus einer Verbindung der Formel

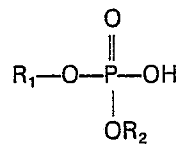

wobei $R_1$ eine $C_1$—$C_{20}$-Kohlenwassserstoffgruppe und $R_2$ Wasserstoff oder eine $C_1$—$C_{20}$-Kohlenwasserstoffgruppe sind, durchgeführt wird.

2. Verfahren nach Anspruch 1, dadurch gekennzeichnet, daß das 3-wertige Phosphortrihalogenid Phosphortrichlorid oder Phosphortribromid ist.

3. Verfahren nach Anspruch 2, dadurch gekennzeichnet, daß das Phosphortrihalogenid Phosphortrichlorid ist.

4. Verfahren nach den vorhergehenden Ansprüchen, dadurch gekennzeichnet, daß das Molverhältnis Pentaerythrit:Phosphortrihalogenid 1:2 ist.

5. Verfahren nach den vorhergehenden Ansprüchen, dadurch gekennzeichnet, daß $R_1$ eine Alkyl- oder Arylgruppe ist und $R_2$ Wasserstoff oder eine Alkyl- oder Arylgruppe ist.

6. Verfahren nach Anspruch 5, dadurch gekennzeichnet, daß $R_1$ eine $C_1$—$C_6$-Alkylgruppe und $R_2$ Wasserstoff oder eine $C_1$—$C_6$-Alkylgruppe sind.

7. Verfahren nach Anspruch 6, dadurch gekennzeichnet, daß der Katalysator saures Methylphosphat ist.

8. Verfahren nach den vorhergehenden Ansprüchen, dadurch gekennzeichnet, daß das Pentaerythrit und Phosphortrihalogenid anfangs bei einer Temperatur von 20° bis 70°C kobiniert und anschließend auf eine Temnperatur von 80° bis 125°C erhitzt werden.

9. Verfahren nach den Ansprüchen 4 oder 5, dadurch gekennzeichnet, daß Pentaerythrit und Phosphortrichlorid im Molverhältnis 1:2 in Gegenwart des Phosphorsäure-Katalysators umgesetzt werden.

10. Verfahren nach Anspruch 9, dadurch gekennzeichnet, daß $R_1$ eine $C_1$—$C_6$-Alkylgruppe und $R_2$ Wasserstoff oder eine $C_1$—$C_6$-Alkylgruppe sind.

11. Verfahren nach Anspruch 10, dadurch gekennzeichnet, daß der Katalysator saures Methylphosphat ist.

12. Verfahren nach den Ansprüchen 9, 10 oder 11, dadurch gekennzeichnet, daß das Pentaerythrit und Phosphortrichlorid anfans bei einer Temperatur von 20° bis 70°C kombiniert und anschließend auf eine Temperatur von 80° bis 125°C erhitzt werden.

**Revendications**

1. Procédé de la préparation d'un ester de pentaérythritol d'un acide halogéné du phosphore, par la réaction du pentaérythritol avec un trihalogénure de phosphore trivalent, conduiteen présence d'un catalyseur, caractérisé en ce que la réaction est conduite en présence d'une quantité catalytique efficace d'un catalyseur de type acide de phosphore, comprenant un composé de formule:

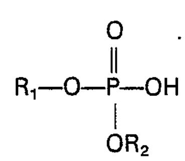

dans laquelle $R_1$ représente un groupe hydrocarbyle en $C_1$—$C_{20}$ et $R_2$ représente l'hydrogène ou un groupe hydrcarbyle en $C_1$—$C_{20}$.

2. Procédé selon la revendication 1, caractérisé en ce que le trihalogénure de phosphore trivalent est le trichlorure de phosphore ou le tribomure de phosphore.

3. Procédé selon la revendication 2, caractérisé en ce que le trihalogénure de phosphore est le trichlorure de phosphore.

4. Procédé selon l'une quelconque des revendications précédentes, caractérisé en ce que la rapport molaire de pentaérythritol:trihalogénure de phosphore est égal à 1:2.

5. Procédé selon l'une quelconque des revendications précédentes, caractérisé en ce que $R_1$ représente

un groupe alkyle ou aryle et $R_2$ représente un atome d'hydrogène ou un groupe alkyle ou aryle.

6. Procédé selon la revendication 5, caractérisé en ce que $R_1$ représente un groupe alkyle en $C_1$—$C_6$ et $R_2$ représente un atome d'hydrogène ou un groupe alkyle en $C_1$—$C_6$.

7. Procédé selon la revendication 6, caractérisé en ce que le catalyseur est le phosphate acide de méthyle.

8. Procédé selon l'une quel'conque des revendications précédentes, caractérisé en ce que l'on combine initialement le pentaérythritol et le trichlorure de phosphore à une température comprise entre 20° et 70°C, puis on les chauffe jusqu'à une température de 80°C à 125°C.

9. Procédé selon la revendication 4 ou 5, caractérisé en ce que le pentaérythritol et le trichlorure de phosphore réagissent selon un rapport molaire de 1:2 en présence dudit catalyseur de type acide de phosphore.

10. Procédé selon la revendication 9, caractérisé en ce que $R_1$ représente un groupe alkyle en $C_1$—$C_6$ et $R_2$ représente un atome d'hydrogène ou un groupe alkyle en $C_1$—$C_6$.

11. Procédé selon la revendication 10, caractérisé en ce que le catalyseur est le phosphate acide de méthyle.

12. Procédé selon la revendication 9, 10, ou 11, caractérisé en ce que l'on combine initialement le pentaérythritol et le trichlorure de phosphore à une température de 20° à 70°C, puis on les chauffe jusqu'à une température de 80 à 125°C.